# EUROPÄISCHE PATENTSCHRIFT

(11) **EP 2 867 396 B1**
(45) Veröffentlichungstag und Bekanntmachung des Hinweises auf die Patenterteilung: **25.07.2018**
(21) Anmeldenummer: 13725283.9
(22) Anmeldetag: 28.05.2013
(51) Int. Cl.: D03D 1/00, D03D 11/00, D03D 15/00, G02B 6/02

(54) **GEWEBE MIT LICHTEMISSIONSSCHICHT**
WOVEN FABRIC WITH LIGHT EMITTING LAYER
TISSU AVEC NAPPE ECLAIRANTE

(30) Priorität: 30.06.2012 DE 102012013105
(43) Veröffentlichungstag der Anmeldung: 06.05.2015
(73) Patentinhaber: Daimler AG, 70327 Stuttgart (DE)
(72) Erfinder: ZIMMERMANN, Tina, 72336 Balingen (DE); BIEDER, Hubert, 73770 Denkendorf (DE)
(74) Vertreter: JENSEN & SON
(86) Internationale Anmeldenummer: PCT/EP2013/001573
(87) Internationale Veröffentlichungsnummer: WO 2014/000848

(56) Entgegenhaltungen:
- EP-B1- 1 877 605
- WO-A1-02/12785
- WO-A1-2008/043975
- DE-U1-202006 006 387

## Beschreibung

Die vorliegende Erfindung betrifft ein textiles Flächengebilde sowie ein Kraftfahrzeug mit einem solchen textilen Flächengebilde.

Textile Flächengebilde mit Leuchteigenschaften sind bekannt und können zur Beleuchtung eines Fahrzeuginnenraums in einem Kraftfahrzeug verwendet werden. Hierzu können Lichtleitfasern, welche eine partielle seitliche Auskopplung des in sie eingekoppelten Lichtes ermöglichen, in ein solches textiles Flächengebilde eingebracht sein. Als textiles Medium kann beispielsweise ein herkömmliches Fasergewebe verwendet werden, da sich dessen Herstellungsprozess besonders gut für die Einarbeitung von Lichtleitfasern eignet.

Die in dem Fasergewebe eingebrachten, herkömmlichen Lichtleitfasern, welche auf dem Gebiet der Datenübertragung zur Signalübertragung verwendet werden, werden zur Verwendung als Lichtquelle in einem textilen Flächengebilde derart modifiziert, dass sie Licht nicht nur von einem ersten zu einem zweiten Ende der Lichtleitfaser transportieren, sondern in eine Querrichtung der Lichtleitfaser wenigstens teilweise auskoppeln können. Eine solche seitliche Auskopplung von Licht aus der Lichtleitfaser kann mittels einer geeigneten Oberflächenbehandlung oder einer geeigneten Dotierung des Fasermaterials der Lichtleitfasern, aber auch durch die Wahl geeigneter Biege-Radien der Lichtleitfasern erreicht werden.

Ein Nachteil von solchen herkömmlichen textilen Flächengebilden besteht jedoch darin, dass diese nicht die für den Dauereinsatz in einem Kraftfahrzeug erforderliche Beständigkeit aufweisen; aufgrund der Bindungsart zwischen den Lichtleitfasern und dem Fasergewebe sind in solchen herkömmlichen Fasergeweben die Lichtleitfasern direkt an der Oberfläche des Fasergewebes angeordnet und nur mittels weniger Verknüpfungspunkte an diesem fixiert. Dies hat zur Folge, dass die Lichtleitfasern anfällig gegenüber äußeren mechanischen Einwirkungen sind. Dem kann zwar grundsätzlich durch eine geeignete Oberflächenbehandlung entgegengewirkt werden; dies wiederum führt aber häufig zu einer unerwünschten Verschlechterung der optischen Eigenschaften der in dem textilen Flächengebilde eingearbeiteten Lichtleitfasern. Beispielsweise kann eine solche Oberflächenbehandlung zu einer inhomogenen Abstrahlung von Licht sowie zu unerwünschten "Glitzerpunkten" auf dem textilen Flächengebilde führen, welche ein ungleichmäßiges und damit minderwertiges Erscheinungsbild des textilen Flächengebildes in einem Kraftfahrzeug zur Folge hat. Zudem ist eine derartige Oberflächenbehandlung relativ kostenintensiv, was sich nachteilig auf die Herstellungskosten für solche herkömmliche textile Flächengebilde auswirkt.

Die DE 10 2007 018 227 A1 beschreibt ein textiles Flächengebilde, ein Trägermaterial und eine Mehrzahl von Bündeln mit lichtleitenden Fasern. Die Bündel mit lichtleitenden Fasern sind durch zumindest einen Faden auf dem Trägermaterial befestigt. Gleichzeitig hält der zumindest eine Faden die Faserbündel zusammen.

Die EP 2 267 204 A1 beschreibt ein textiles Flächengebilde mit mindestens zwei zueinander parallel verlaufenden Kettfäden. Zwischen den parallel zueinander verlaufenden Kettfäden ist eine Lichtleitfaser angeordnet, welche ebenfalls parallel zu den Kettfäden verläuft und welche relativ zu den Kettfäden in ihrer Lage fixiert ist.

Die US 5,021,928 beschreibt ein panel-artig ausgebildetes Beleuchtungssystem mit wenigstens einer Lichtemissionsvorrichtung sowie mit wenigstens einer Lichtleitfaser, welche mit der Lichtemissionsvorrichtung verbunden ist.

Die US 2005/0252568 A1 beschreibt ein Gewebe mit einer Mehrzahl von ersten licht-reflektierenden Fasereinheiten, welche im Wesentlichen parallel zueinander beabstandet in einer ersten Richtung angeordnet sind, sowie ein Mehrzahl von Lichtleitfaser-Einheiten, welche im Wesentlichen parallel zueinander in eine zweite Richtung beabstandet zueinander angeordnet sind, wobei jede Lichtleitfaser-Einheit wenigstens einen lichtemittierenden Seitenabschnitt aufweist, und wobei die lichtreflektierenden Fasereinheiten und die Lichtleitfasereinheiten gekreuzt zueinander angeordnet sind. Das leuchtende Gewebe umfasst des Weiteren eine Mehrzahl von lichtakkumulierenden Fasereinheiten, welche entlang der ersten und zweiten Richtung angeordnet sind, wobei ein Teil der lichtakkumulierenden Fasereinheiten mit den ersten Licht-reflektierenden Fasereinheiten in die erste Richtung verwebt sind, und wobei ein Abschnitt der lichtakkumulierenden Fasereinheiten mit den Lichtleit-Fasereinheiten verwebt ist.

Die US 6,851,844 B2 beschreibt ein Faseroptik-Gewebe mit gewebten optischen Fasern, einer lichtundurchlässigen Beschichtung auf den Fasern und Öffnungen auf den höchsten Punkten des Gewebes. Die lichtundurchlässige Beschichtung verhindert eine unerwünschte Leckage von Licht aus den Fasern, wohingegen die Öffnungen die Emission von Licht in einer gerichteten Art und Weise von den Fasern erlauben. Die optischen Fasern erlauben die Emission von Licht in einem Abstrahl-Winkel relativ zu der Oberfläche der Fasern derart, dass das Licht nicht von jedem beliebigen Beobachtungspunkt aus sichtbar ist.
Die EP 1 877 605 B1 beschreibt ein Verfahren zur Herstellung textiler Flächen mit darin angeordneten Funktionsfäden. Diese Funktionsfäden können Licht zumindest abschnittsweise in radialer Richtung abstrahlen. Die Funktionsfäden werden bei einem Webvorgang ohne Beteiligung am Aufbau des Textils in die textile Faser eingelegt und von dieser gehalten.

Die WO 2008/043975A1 offenbart einen Beleuchtungskomplex, der optische Fasern umfasst und an einem starren oder halbstarren Träger befestigt ist.

Die EP 1 877 605 B1 offenbart ein Textil mit lichtabstrahlenden Funktionsfäden, die ohne Beteiligung am Aufbau des Textils im Rahmen des Herstellungsvorgangs in dieses eingelegt werden.

Die WO 02/12785 A1 beschreibt ein Textilprodukt mit beleuchteten Fasern.
Es ist eine Aufgabe der vorliegenden Erfindung, eine verbesserte Ausführungsform für ein textiles Flächengebilde anzugeben, bei welcher oben genannte Nachteile beseitigt oder zumindest reduziert sind.

Dieses Problem wird erfindungsgemäß durch den Gegenstand des unabhängigen Anspruchs 1 gelöst. Vorteilhafte Ausführungsformen sind Gegenstand der abhängigen Ansprüche.
Die Erfindung beruht auf dem allgemeinen Gedanken, das textile Flächengebilde mehrschichtig, also mit mehreren Gewebeschichten, aufzubauen, wobei in einer ersten Schicht Lichtleitfasern zur Lichtemission vorgesehen sind, und wobei eine zweite Schicht, welche auf dieser ersten Schicht anliegt, als Schutzschicht ausgebildet ist. Auf diese Weise weist das erfindungsgemäße textile Flächengebilde bezüglich der flächigen Emission von Licht sehr gute optische Eigenschaften auf und besitzt zusätzlich die für die Verwendung in einem Kraftfahrzeug erforderlichen mechanischen Eigenschaften, wie z.B. eine hohe Scheuerbeständigkeit. Das erfindungsgemäße textile Flächengebilde umfasst wenigstens eine erste Gewebeschicht, welche eine Mehrzahl von Kett- und Schussfäden aufweist, sowie eine Lichtemissionsschicht, die flächig an der ersten Gewebeschicht anliegt und mit dieser verbunden und für die Leitung und die Emission von Licht ausgebildet ist. Die erste Gewebeschicht übernimmt dabei die Funktion einer Schutzschicht für die eigentliche Lichtemissionsschicht, so dass die Lichtemissionsschicht selbst hinsichtlich ihrer Scheuerbeständigkeit keine besonderen mechanischen Eigenschaften aufweisen muss, sondern vielmehr hinsichtlich der effektiven und homogenen Emission von Licht optimiert sein kann. Zumindest die erste Gewebeschicht kann als herkömmliches Gewebe mit einer Mehrzahl von Kett- und Schussfäden ausgebildet sein. Vorzugsweise können die Kett- und Schussfäden aus einem Material bestehen, welches eine besonders hohe Scheuerbeständigkeit aufweist und gleichzeitig hinsichtlich der Transmission von Licht aus der Lichtemissionsschicht optimiert ist.

Beispielsweise kann die erste Gewebeschicht Kett- und Schussfäden aus transparenten Chemiefasern, beispielsweise aus Polypropylen (PP) oder Polyester (PES) oder Polyamid (PA), umfassen. Die Chemiefasern können dabei aus Mono- oder/und Multifilamenten aufgebaut sein.

Die Lichtemissionsschicht umfasst eine zweite Gewebeschicht mit Kett- und Schussfäden, wobei wenigstens einer dieser Kett- oder Schussfäden eine Lichtleitfaser ist, mittels welcher Licht quer zu einer Längsrichtung der Lichtleitfaser wenigstens teilweise aus dieser auskoppelbar ist. Die wenigstens eine Lichtleitfaser in der zweiten Gewebeschicht ist mittels zu der Lichtleitfaser komplementärer Schuss- bzw. Kettfäden onduliert. Aufgrund der Ausbildung der Lichtemissionsschicht als zweite Gewebeschicht mit Kett- und Schussfäden kann die wenigstens eine Lichtleitfaser mechanisch stabil in dem textilen Flächengebilde angebracht werden, so dass auf diese Weise auch über einen großen Betriebs-Zeitraum hinweg eine homogene Abstrahlung von aus der Lichtleitfaser ausgekoppeltem Licht erreicht wird.

Vorzugsweise ist die Lichtleitfaser eine Chemiefaser aus Polymethacrylsäureester (PMMA), Polystyrol (PS) oder Polycarbonat (PC). Lichtleitfasern aus solchen Materialien sind besonders kostengünstig herzustellen, so dass sich somit auch die Herstellungskosten des erfindungsgemäßen textilen Flächengebildes reduzieren lassen.

In einer besonders bevorzugten Ausführungsform kann an einer von der ersten Gewebeschicht abgewandten Oberfläche der Lichtemissionsschicht eine Reflexionsschicht angeordnet sein, welche von der Lichtemissionsschicht emittiertes Licht in Richtung der ersten Gewebeschicht reflektiert. Die Reflexionsschicht kann dabei als dritte Gewebeschicht mit Kett- und Schussfäden ausgebildet sein. Mittels einer derartig ausgebildeten Reflexionsschicht kann eine besonders hohe Lichtausbeute des von der Lichtemissionsschicht emittierten Lichtes erzielt werden, so dass mittels eines derartigen textilen Flächengebildes ein besonders hoher optischer Wirkungsgrad erzielt werden kann.

In einer besonders einfachen und damit kostengünstig herzustellenden, weiterbildenden Ausführungsform kann die dritte Gewebeschicht wenigstens eine Chemiefaser aus Polymethacrylsäureester (PMMA) umfassen.

Um die Lichtemissionsschicht dauerhaft mechanisch stabil an der ersten Gewebeschicht bzw. der Reflexionsschicht befestigen zu können, kann die Lichtemissionsschicht mittels einer ersten oder/und einer zweiten Adhäsionsschicht an der ersten Gewebeschicht bzw. der Reflexionsschicht befestigt sein. Alternativ oder zusätzlich kann, um die Befestigung der Lichtemissionsschicht an der ersten Gewebeschicht bzw. der Reflexionsschicht weiter zu verbessern, die Lichtemissionsschicht mittels wenigstens einem Verbindungs-Kettfaden oder/und mittels wenigstens einem Verbindungs-Schussfaden an der ersten Gewebeschicht oder/und der Reflexionsschicht befestigt sein. Alternativ kann die Reflexionsschicht mittels wenigstens eines Verbindungs-Kettfadens oder/und mittels wenigstens eines Verbindungs-Schussfadens an der ersten Gewebeschicht befestigt sein. Um die Materialeigenschaften des textilen Flächengebildes hinsichtlich Drapierfähigkeit, etc. und weiteren Anforderungen, wie sie für eine Verwendung des textilen Flächengebildes in einem Kraftfahrzeug erforderlich sein können, weiter zu verbessern, kann die erste Gewebeschicht oder/und die zweite Gewebeschicht oder/und die dritte Gewebeschicht wenigstens ein Elastangarn umfassen.

Alternativ oder zusätzlich kann die erste Gewebeschicht wenigstens eine transparente Gewebefaser, insbesondere aus Polypropylen (PP) oder Polyester (PES) oder Polyamid (PA), umfassen oder/und wenigstens eine transparente Naturfaser, insbesondere aus Seide oder Baumwolle, umfassen. Alternativ oder zusätzlich kann die erste oder/und zweite oder/und dritte Gewebeschicht ein heizbares oder/und elektrisch leitendes oder/und fluoreszierendes oder/und antibakteriell wirkendes Garn umfassen. Hierdurch lassen sich weitere den Fahrkomfort und/oder die Hygiene steigernde Effekte erzielen.

Die Erfindung betrifft des Weiteren ein Kraftfahrzeug mit einem Fahrzeug-Innenraum und mit einem in dem Fahrzeug-Innenraum angebrachten textilen Flächengebilde mit einem oder mehreren der vorhergehend genannten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen im Rahmen der Ansprüche verwendbar sind. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1a: ein erstes Ausführungsbeispiel eines erfindungsgemäßen textilen Flächengebildes,
- Fig. 1b: eine weitere Variante des Ausführungsbeispiels der Figur 1 mit eingebundenen Deckschicht,
- Fig. 2: eine zweite Variante des Ausführungsbeispiels der Figur 1,
- Fig. 3: eine zweite Variante des Ausführungsbeispiels der Figur 1,
- Fig. 4: eine dritte Variante des Ausführungsbeispiels der Figur 1,
- Fig. 5: eine auf die Ausführungsbeispiele der Figuren 1 bis 4 anwendbare weitere Variante, gemäß der ein Ondulationsabstand der Lichtleitfaser variiert wird.

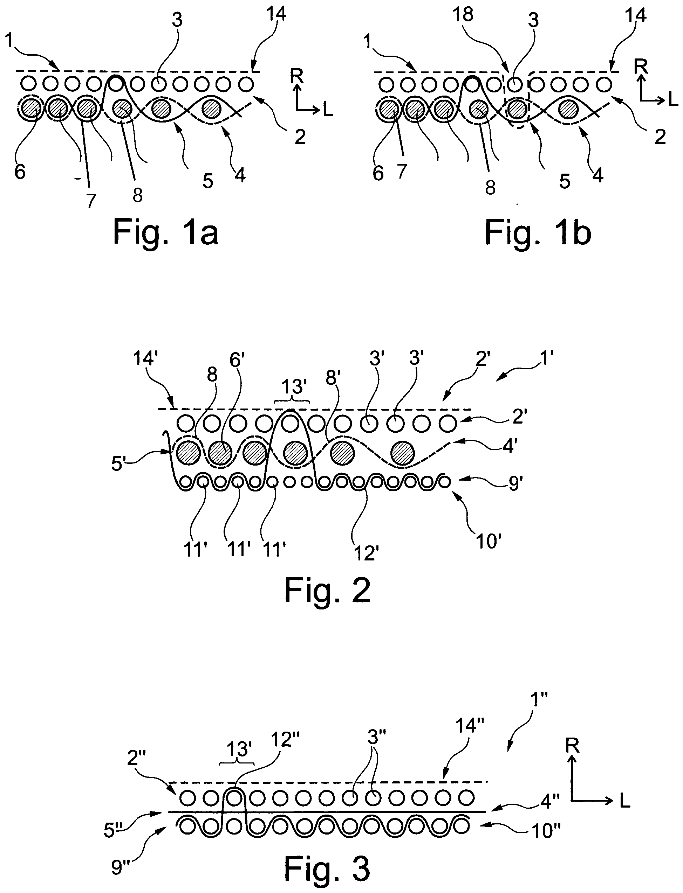

In der Fig. 1a,b ist ein erfindungsgemäßes textiles Flächengebilde dargestellt und mit 1 bezeichnet. Das textile Flächengebilde 1 umfasst eine erste Gewebeschicht 2, welche Kett- und Schussfäden aufweist, wobei in der Darstellung den Fig. 1a,b bezüglich der ersten Gewebeschicht 2 nur Kettfäden 3 dargestellt sind (die Figur 1a,b zeigt also einen Kettschnitt des textilen Flächengebildes 1). Das textile Flächengebilde 1 umfasst des Weiteren eine Lichtemissionsschicht 4, welche flächig an der ersten Gewebeschicht 2 anliegt. Die Lichtemissionsschicht 4 ist mit der ersten Gewebeschicht 2 verbunden und für die Leitung und die Emission von Licht ausgebildet. Die Lichtemissionsschicht 4 umfasst eine zweite Gewebeschicht 5 mit Kett- und Schussfäden 6, 7. Wenigstens einer dieser Schussfäden 7 ist eine Lichtleitfaser 8 (in der Figur 1a,b mit gestrichelter Linie dargestellt), mittels welcher Licht in Richtung R (also orthogonal zu der Lichtemissionsschicht 8 und quer zu einer Längsrichtung L der Lichtleitfaser 8) wenigstens teilweise aus dieser auskoppelbar ist. Hierzu kann die Lichtleitfaser 8 einer geeigneten Oberflächenhandlung unterzogen worden sein oder in geeigneter Weise dotiert sein. Die Lichtleitfaser 8 ist in der zweiten Gewebeschicht 5 mittels zu der Lichtleitfaser 8 komplementärer Kettfäden 6 onduliert. Ein weiterer Schussfaden 7 (in der Figur 1a mit durchgezogener Linie dargestellt) kann in der Art eines Verbindungs-Schussfadens ausgebildet sein, welcher die Lichtemissionsschicht 4 mit der ersten Gewebeschicht 2 verbindet.

Es ist klar, dass in einer Variante die Lichtleitfaser 8 auch als Kettfaden ausgebildet sein kann, so dass sie in der zweiten Gewebeschicht 5 dann mittels komplementärer Schussfäden onduliert ist.

Die Lichtleitfaser 8 kann vorzugsweise eine Chemiefaser aus Polymethacrylsäureester (PMMA), Polystyrol (PS) oder Polycarbonat (PC) sein. Die erste Gewebeschicht 2 kann bevorzugt eine Chemiefaser aus Polypropylen (PP), Polyester (PES) oder Polyamid (PA) sein, wobei die Chemiefasern aus Monofilamenten oder Multifilamenten bestehen können. Alternativ kann auch eine transparente Naturfaser, insbesondere aus Seide oder Baumwolle, verwendet werden.

In der Figur 2 ist eine Variante des erfindungsgemäßen textilen Flächengebildes 1' gezeigt, in welchem an einer von der ersten Gewebeschicht 2' abgewandten Oberfläche der Lichtemissionsschicht 4' eine Reflexionsschicht 9' angeordnet ist, welche von der Lichtemissionsschicht 4' emittiertes Licht in Richtung R der ersten Gewebeschicht 3' reflektiert. Die Reflexionsschicht 9' ist dabei als dritte Gewebeschicht 10' mit Kett- und Schussfäden 11', 12' ausgebildet. Die dritte Gewebeschicht 10' kann Chemiefasern aus Polymethacrylsäureester (PMMA) umfassen. Die Chemiefasern können dabei eine trilobale oder sternförmige Querschnittsfläche aufweisen. Der Schussfaden 12' kann in der Art eines Verbindungs-Schussfadens ausgebildet sein, welcher, wie in der Figur 2 exemplarisch gezeigt, die erste Gewebeschicht 2' mit der dritten Gewebeschicht 10' verbinden kann. Hierzu kann der als Verbindungs-Schussfaden ausgebildete Schussfaden 12' im Bereich 13' durch die Lichtemissionsschicht 4' durchgeführt sein, so dass auf diese Weise die drei Gewebeschichten 4', 5' und 10' mechanisch stabil miteinander verbunden werden können.

Es ist klar, dass der in der Figur 2 mit 13' bezeichnete Bereich nur exemplarisch zu verstehen ist. Tatsächlich können in Varianten eine Vielzahl von solchen Bereichen 13', in welchen der Verbindungs-Schussfaden 12' die erste und dritte Gewebeschicht 2', 10' miteinander verbindet, vorgesehen sein. Alternativ oder zusätzlich können selbstverständlich auch Kettfäden 11' als Verbindungs-Kettfäden ausgebildet sein. Für den Fachmann ergeben sich also vielfältige Realisierungsmöglichkeiten, von denen in der Figur 2 nur eine einzige exemplarisch dargestellt ist.

Grundsätzlich kann die erste Gewebeschicht 2, 2' wenigstens eine für Licht transparente Chemiefaser, insbesondere aus Polypropylen (PP) oder Polyester (PS) oder Polyamid (PA), umfassen. Alternativ oder zusätzlich kann die erste Gewebeschicht 2, 2' aber auch eine für Licht transparente Naturfaser, insbesondere aus Seide oder Baumwolle, umfassen.

Auf der Oberseite der ersten Gewebeschicht 2, 2' kann optional, beispielsweise mittels Bedrucken, eine Deckschicht 14, 14', aufgebracht sein. Mittels einer solchen Deckschicht können für einen Betrachter optisch besonders ansprechende Muster realisiert werden, welche für ein hochwertiges Erscheinungsbild des textilen Flächengebildes 1, 1' sorgen. In der Figur 1a ist dabei eine Variante gezeigt, gemäß welcher die Deckschicht 14 auf der ersten Gewebeschicht 2 aufliegt. Demgegenüber zeigt die Figur 1b eine dazu alternative Variante, gemäß welcher die Deckschicht 14 mit der ersten Gewebeschicht 2 zumindest abschnittsweise (wie in der Figur 1b in dem mit dem Bezugszeichen 18 bezeichneten Bereich dargestellt) verbunden und mit dieser im Bereich 18 ein Gewebe ausbildet. Es ist klar, dass der Bereich 18 in der Figur 1b nur exemplarisch gewählt ist; in Varianten zum Ausführungsbeispiel der Figur 1b sind diesbezüglich zahlreiche Variationen vorstellbar. Beispielsweise kann die Deckschicht 14 nicht nur bereichsweise, sondern über die gesamte Kontaktfläche der Deckschicht 14 mit der ersten Gewebeschicht 2 mit dieser ein Gewebe ausbilden. Auch kann daran gedacht sein, dass die Kettfäden 6 der zweiten Gewebeschicht 5 von der Deckschicht 14 miteingebunden sind (nicht gezeigt). Vorzugsweise kann für die Deckschicht 14, 14' ein lumineszierendes Material gewählt werden. Sowohl die Deckschicht 14, 14' als auch die erste Gewebeschicht 2, 2' kann beim Weben, also bei der Herstellung, mit einer geeigneten Musterung versehen werden. Zur Verbesserung der mechanischen Eigenschaften, insbesondere der Drapierfähigkeit, der ersten, zweiten und dritten Gewebeschicht 2, 5, 2', 5', 10' können in diese Elastangarne eingearbeitet sein.

In der Figur 3 ist nun eine dritte Variante des erfindungsgemäßen textilen Flächengebildes 1" gezeigt, gemäß welchem die Lichtemissionsschicht 4" ondulationsfrei zwischen der ersten und dritten Gewebeschicht 2", 10" angeordnet ist. Die Lichtemissionsschicht 4" kann ein elektrolumineszierendes Garn umfassen.
Auch in dieser Variante kann auf der Oberseite der ersten Gewebeschicht 2" eine Deckschicht 14" wie vorangehend erläutert vorgesehen sein. Die Erläuterungen zur Variante der Deckschicht 14 gemäß der Figur 1b gelten mutatis mutandis auch für die im Zusammenhang mit den Figuren 2 und 3 erläuterten Deckschichten 14', 14".

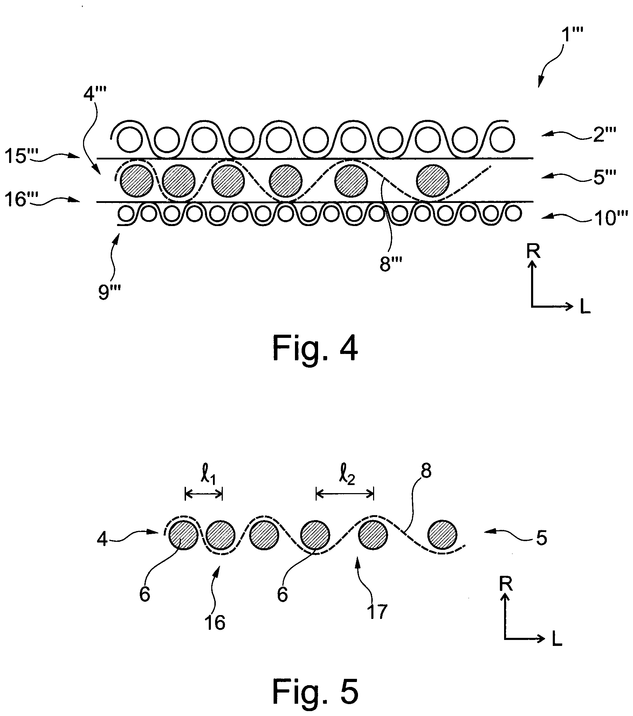

In der Darstellung der Figur 4 ist nun eine weitere Variante des erfindungsgemäßen textilen Flächengebildes 1''' gezeigt, welches die vorangehend bereits erläuterte erste, zweite und dritte Gewebeschicht 2''', 5''', 10''' aufweist, wobei gemäß dieser Variante die erste Gewebeschicht 2'" an der als Lichtemissionsschicht 4''' ausgebildeten zweiten Gewebeschicht 5''' mittels einer ersten Adhäsionsschicht 15''' befestigt ist. Entsprechend ist die zweite Gewebeschicht 5''' mittels einer zweiten Adhäsionsschicht 16'" an der als Reflexionsschicht 9''' ausgebildeten zweiten Adhäsionsschicht 16''' befestigt.

In weiteren Varianten können die Ausführungsbeispiele gemäß den Figuren 1 bis 4 miteinander kombiniert werden.

In der Darstellung der Figur 5 ist gezeigt, wie in einer Variante der Ausführungsbeispiele gemäß der Figuren 1 bis 4 die Ondulation der Lichtleitfaser 8 mittels eines dazu komplementären Kettfadens 6 mit variierendem Abstand realisiert sein kann. Auf diese Weise kann eine besonders homogene Lichtauskopplung von Licht aus der als zweite Gewebeschicht 5 ausgebildeten Lichtemissionsschicht 4 erzielt werden. So kann hierfür in einem Bereich 16 ein Ondulationsabstand 11 der Kettfäden 6 kleiner sein als in einem von diesem beabstandet angeordneten zweiten Bereich 17, in welcher der Ondulationsabstand I₂ also größer ist als der Ondulationsabstand I₁ im Bereich 16. Bezüglich einer derartigen Variation des Ondulationsabstandes ergeben sich für den Fachmann zahlreiche Variationsmöglichkeiten.

Alternativ zu der in der Figur 5 gezeigten Variation des Ondulationsabstands kann auch ein Durchmesser des Kettfadens 6 innerhalb der Lichtemissionsschicht 4 variiert werden.

## Patentansprüche

1. Textiles Flächengebilde (1; 1'; 1"; 1'''),
- mit wenigstens einer Kett- und Schussfäden aufweisenden ersten Gewebeschicht (2; 2'; 2"; 2'''),
- mit wenigstens einer Lichtemissionsschicht (4; 4'; 4"; 4'''), die flächig an der ersten Gewebeschicht (2; 2'; 2"; 2''') anliegt und mit dieser verbunden und für die Leitung und die Emission von Licht ausgebildet ist, wobei
- die Lichtemissionsschicht (4; 4'; 4''') eine zweite Gewebeschicht (5; 5'; 5''') mit Kett- und Schussfäden umfasst,
- wobei wenigstens einer dieser Kett- oder Schussfäden eine Lichtleitfaser (8; 8'; 8''') ist, mittels welcher Licht quer zu einer Längsrichtung der Lichtleitfaser (8; 8'; 8''') wenigstens teilweise aus dieser auskoppelbar ist,
- wobei die Lichtleitfaser (8; 8'; 8''') in der zweiten Gewebeschicht (5; 5', 5''') mittels zu der Lichtleitfaser komplementärer Schuss- bzw. Kettfäden onduliert ist.

2. Textiles Flächengebilde (1; 1'; 1"; 1''') nach Anspruch 1, **dadurch gekennzeichnet, dass** die Lichtleitfaser (8; 8', 8") mittels eines dazu komplementären Kettfadens (6) mit variierendem Abstand realisiert ist.

3. Textiles Flächengebilde (1; 1'; 1''') nach Anspruch 1 oder Anspruch 2,
**dadurch gekennzeichnet, dass**
die Lichtleitfaser (8; 8'; 8''') eine Chemiefaser aus Polymethacrylsäureester (PMMA), Polystyrol (PS) oder Polycarbonat (PC) umfasst.

4. Textiles Flächengebilde (1'; 1"; 1''') nach einem der vorhergehenden Ansprüche, **dadurch gekennzeichnet, dass**
- an einer von der ersten Gewebeschicht (2'; 2"; 2''') abgewandten Oberfläche der Lichtemissionsschicht (4'; 4"; 4''') eine Reflexionsschicht (9'; 9"; 9''') angeordnet ist, welche von der Lichtemissionsschicht (4'; 4"; 4''') emittiertes Licht in Richtung der ersten Gewebeschicht reflektiert,
- die Reflexionsschicht (9'; 9"; 9''') als dritte Gewebeschicht (10'; 10"; 10''') mit Kett- und Schussfäden ausgebildet ist.

5. Textiles Flächengebilde (1; 1'; 1''') nach Anspruch 3 oder 4,
**dadurch gekennzeichnet, dass**
die dritte Gewebeschicht (10'; 10"; 10''') wenigstens eine Chemiefaser aus Polymethacrylsäureester (PMMA), umfasst.

6. Textiles Flächengebilde (1''') nach Anspruch 4 oder 5,
**dadurch gekennzeichnet, dass**
die Lichtemissionsschicht (4''') mittels einer ersten und/oder zweiten Adhäsionsschicht (15''', 16''') an der ersten Gewebeschicht (2''') bzw. der Reflexionsschicht (10''') befestigt ist.

7. Textiles Flächengebilde (1; 1') nach einem der Ansprüche 4 bis 6,
**dadurch gekennzeichnet, dass**
- die Lichtemissionsschicht (4) mittels wenigstens einem Verbindungs-Kettfaden und/oder mittels wenigstens einem Verbindungs-Schussfaden an der ersten Gewebeschicht (2) und/oder der Reflexionsschicht befestigt ist, oder
- die Reflexionsschicht (10') mittels wenigstens einem Verbindungs-Kettfaden und/oder mittels wenigstens einem Verbindungs-Schussfaden an der ersten Gewebeschicht (2') befestigt ist.

8. Textiles Flächengebilde (1; 1'; 1"; 1''') nach einem der Ansprüche 4 bis 7,
**dadurch gekennzeichnet, dass**
- die erste Gewebeschicht (1; 1'; 1"; 1''') und/oder zweite Gewebeschicht (5; 5'; 5"; 5''') und/oder dritte Gewebeschicht (10; 10'; 10"; 10''') wenigstens ein Elastangarn umfasst, und/oder
- die erste Gewebeschicht wenigstens eine transparente Chemiefaser, insbesondere aus Polypropylen (PP) oder Polyester (PES) oder Polyamid (PA), und/oder wenigstens eine transparente Naturfaser, insbesondere aus Seide oder Baumwolle, umfasst, und/oder
- die erste und/oder zweite und/oder dritte Gewebeschicht (2, 4; 2', 4'; 10'; 2", 4", 10"; 2''', 4", 10''') ein heizbares oder elektrisch leitendes oder fluoreszierendes oder antibakteriell wirkendes Garn umfasst.

9. Kraftfahrzeug
- mit einem Fahrzeug-Innenraum,
- mit einem in dem Fahrzeug-Innenraum angebrachten textilen Flächengebilde (1; 1'; 1"; 1''') nach einem der vorhergehenden Ansprüche.

## Claims

1. Textile fabric (1; 1'; 1"; 1'''), comprising
- at least one first fabric layer (2; 2'; 2"; 2''') having warp threads and weft threads,
- at least one light emitting layer (4; 4'; 4"; 4'''), which is in surface contact with the first fabric layer (2; 2'; 2"; 2''') and joined thereto and designed for conducting and emitting light,
- wherein the light emitting layer (4; 4'; 4''') comprises a second fabric layer (5; 5'; 5''') with warp threads and weft threads,
- wherein at least one of these warp threads and weft threads is an optical fibre (8; 8'; 8"'), by means of which light can at least partially be coupled out of the optical fibre (8; 8'; 8''') transversely to a longitudinal direction thereof,
- wherein the optical fibre (8; 8'; 8''') is undulated in the second fabric layer (5; 5'; 5''') by means of weft threads and/or warp threads which are complementary to the optical fibre.

2. Textile fabric (1; 1'; 1"; 1''') according to claim 1,
**characterised in that** the optical fibre (8; 8'; 8''') is realised with varying spacing by means of a complementary warp thread (6).

3. Textile fabric (1; 1'; 1''') according to claim 1 or claim 2, **characterised in that** the optical fibre (8; 8'; 8''') comprises a synthetic fibre of polymethacrylic acid ester (PMMA), polystyrene (PS) or polycarbonate (PC).

4. Textile fabric (1'; 1"; 1''') according to any of the preceding claims,
**characterised in that**
- at a surface of the light emitting layer (4'; 4"; 4''') which is remote from the first fabric layer (2'; 2"; 2'''), there is located a reflection layer (9'; 9"; 9'''), which reflects light emitted by the light emitting layer (4'; 4"; 4''') towards the first fabric layer,
- the reflection layer (9'; 9"; 9''') is designed as a third fabric layer (10'; 10"; 10''') with warp threads and weft threads.

5. Textile fabric (1'; 1"; 1''') according to claim 3 or 4,
**characterised in that**
the third fabric layer (10'; 10"; 10''') comprises at least one synthetic fibre of polymethacrylic acid ester (PMMA).

6. Textile fabric (1''') according to claim 4 or 5,
**characterised in that**
the light emitting layer (4''') is secured to the first fabric layer (2''') and/or the reflection layer (10''') respectively by means of a first and/or second adhesion layer (15''', 16''').

7. Textile fabric (1; 1') according to any of claims 4 to 6,
**characterised in that**
- the light emitting layer (4) is secured to the first fabric layer (2) and/or the reflection layer by means of at least one connecting warp thread and/or by means of at least one connecting weft thread, or
- the reflection layer (10') is secured to the first fabric layer (2') by means of at least one connecting warp thread and/or by means of at least one connecting weft thread.

8. Textile fabric (1; 1'; 1"; 1''') according to any of claims 4 to 7,
**characterised in that**
- the first fabric layer (2; 2'; 2"; 2''') and/or the second fabric layer (5; 5'; 5"; 5''') and/or the third fabric layer (10; 10'; 10"; 10''') comprise(s) at least one elastane yarn, and/or
- the first fabric layer comprises at least one transparent synthetic fibre, in particular of polypropylene (PP), polyester (PES) or polyamide (PA) and/or at least one natural fibre, in particular of silk or cotton, and/or
- the first and/or second and/or third fabric layer (2, 4; 2', 4', 10'; 2", 4", 10"; 2''', 4''', 10''') comprises a heatable or electrically conductive or fluorescent or antibacterially acting yarn.

9. Motor vehicle
- with a vehicle interior,
- with a textile fabric (1; 1'; 1"; 1''') according to any of the preceding claims installed into the vehicle interior.

## Revendications

1. Structure textile (1, 1', 1", 1'''),
- comprenant au moins une première couche de tissu (2, 2', 2", 2''') comportant des fils de chaîne et des fils de trame,
- comprenant au moins une couche d'émission de lumière (4, 4', 4", 4'''), qui repose à plat sur la première couche de tissu (2; 2', 2", 2''') et qui est reliée à celle-ci et qui est conçue pour la conduite et l'émission de la lumière,
- la couche d'émission de lumière (4, 4', 4''') comprenant une deuxième couche de tissu (5; 5'; 5''') comportant des fils de chaîne et des fils de trame,
- au moins l'un de ces fils de chaîne ou ces fils de trame étant une fibre optique (8, 8', 8'''), au moyen de laquelle la lumière peut être déclenchée transversalement à une direction longitudinale de la fibre optique (8, 8', 8''') au moins partiellement à partir de celle-ci,
- la fibre optique (8, 8', 8''') étant ondulée dans la deuxième couche de tissu (5, 5', 5''') au moyen des fils de chaîne ou des fils de trame complémentaires à la fibre optique.

2. Structure textile (1, 1', 1", 1''') selon la revendication 1, **caractérisée en ce que** la fibre optique (8; 8', 8") est réalisée au moyen d'un fil de chaîne (6) complémentaire présentant une distance variable.

3. Structure textile (1; 1", 1''') selon la revendication 1 ou la revendication 2, **caractérisée en ce que** la fibre optique (8, 8', 8"') comprend une fibre chimique constituée de polyméthacrylate de méthyle (PMMA), de polystyrol (PS) ou de polycarbonate (PC).

4. Structure textile (1', 1", 1''') selon l'une quelconque des revendications précédentes, **caractérisée en ce que** - sur une surface opposée à la première couche de tissu (2', 2"; 2'''), de la couche d'émission de lumière (4', 4", 4''') est disposée une couche réflectrice (9', 9", 9'''), qui réfléchit la lumière émise par la couche d'émission de lumière (4', 4", 4''') dans la direction de la première couche de tissu, la couche réflectrice (9'; 9"; 9''') est conçue sous la forme d'une troisième couche de tissu (10', 10", 10''') comprenant des fils de chaîne et des fils de trame.

5. Structure textile (1, 1", 1''') selon la revendication 3 ou la revendication 4, **caractérisée en ce que** la troisième couche de tissu (10', 10", 10''') comprend au moins une fibre chimique constituée d'un polyméthacrylate de méthyle (PMMA).

6. Structure textile (1"') selon la revendication 4 ou la revendication 5, **caractérisée en ce que** la couche d'émission de lumière (4''') est fixée au moyen d'une première et/ou d'une seconde couche adhésive (15''', 16''') sur la première couche de tissu (2''') ou sur la couche réflectrice (10''').

7. Structure textile (1, 1') selon l'une quelconque des revendications 4 à 6, **caractérisée en ce que**
- la couche d'émission de lumière (4) est fixée au moyen d'au moins un fil de chaîne de liaison et/ou au moyen d'au moins un fil de trame de liaison à la première couche de tissu (2) et/ou à la couche réflectrice, ou
- la couche réflectrice (10') est fixée au moyen d'au moins un fil de chaîne de liaison et/ou au moyen d'un fil de trame de liaison à la première couche de tissu (2').

8. Structure textile (1, 1', 1", 1''') selon l'une quelconque des revendications 4 à 7, **caractérisée en ce que**
- la première couche de tissu (1, 1', 1", 1''') et/ou la deuxième couche de tissu (5, 5', 5", 5''') et/ou la troisième couche de tissu (10, 10', 10", 10''') comprend au moins un fil d'élastane et/ou
- la première couche de tissu comprend au moins une fibre chimique transparente, en particulier constituée de polypropylène (PP) ou de polyester (PES) ou de polyamide (PA), et/ou
- au moins une fibre naturelle transparente, en particulier constituée de soie ou de coton, et/ou
- la première et/ou la deuxième et/ou la troisième couche de tissu (2, 4, 2', 4', 10', 2", 4", 10",2''', 4", 10''') comprend un fil à activité bactéricide ou fluorescent ou électroconducteur ou thermoconducteur.

9. Véhicule automobile
- équipé d'un habitacle
- comprenant une structure textile appliquée dans l'habitacle (1, 1', 1", 1''') selon l'une quelconque des revendications précédentes.
